(19) **Europäisches Patentamt / European Patent Office / Office européen des brevets**

(11) **EP 1 572 382 B1**

(12) **EUROPÄISCHE PATENTSCHRIFT**

(45) Veröffentlichungstag und Bekanntmachung des Hinweises auf die Patenterteilung:
**28.03.2007 Patentblatt 2007/13**

(21) Anmeldenummer: **03785762.0**

(22) Anmeldetag: **06.12.2003**

(51) Int Cl.:
**B06B 1/04** *(2006.01)*  **G01N 29/24** *(2006.01)*

(86) Internationale Anmeldenummer:
**PCT/EP2003/013857**

(87) Internationale Veröffentlichungsnummer:
**WO 2004/058420 (15.07.2004 Gazette 2004/29)**

(54) **ELEKTROMAGNETISCHER ULTRASCHALLWANDLER**

ELECTROMAGNETIC ULTRASOUND CONVERTER

TRANSDUCTEUR D'ULTRASONS ELECTROMAGNETIQUE

(84) Benannte Vertragsstaaten:
**AT BE BG CH CY CZ DE DK EE ES FI FR GB GR HU IE IT LI LU MC NL PT RO SE SI SK TR**

(30) Priorität: **20.12.2002 DE 10259891**

(43) Veröffentlichungstag der Anmeldung:
**14.09.2005 Patentblatt 2005/37**

(73) Patentinhaber: **Fraunhofer-Gesellschaft zur Förderung der angewandten Forschung e.V. 80686 München (DE)**

(72) Erfinder:
• **HÜBSCHEN, Gerhard**
  **66740 Saarlouis (DE)**
• **NIESE, Frank**
  **66125 Saarbrücken (DE)**
• **VISKOV, Alexander**
  **66125 Saarbrücken (DE)**

(74) Vertreter: **Rösler, Uwe**
  **Rösler Patentanwaltskanzlei,**
  **Landsberger Strasse 480a**
  **81241 München (DE)**

(56) Entgegenhaltungen:
  **EP-A- 0 440 317         EP-A- 0 579 255**
  **DE-C- 4 228 426         US-A- 6 009 756**

**EP 1 572 382 B1**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

## Beschreibung

### Technisches Gebiet

Die Erfindung bezieht sich auf einen elektromagnetischen Ultraschallwandler zur koppelmittelfreien Erzeugung und/oder zum Empfang von Ultraschallwellen in Form linear polarisierter Transversalwellen in ein bzw. aus einem Werkstück mit wenigstens einer die Ultraschallwellen innerhalb des Werkstückes wandelnden Einheit, die eine Spulenanordnung zur Erzeugung bzw. zum Nachweis eines HF-Magnetfeldes sowie eine Vormagnetisierungseinheit zur Erzeugung eines quasistatischen Magnetfeldes aufweist, das das HF-Magnetfeld im Werkstück überlagert, wobei die Spulenanordnung torusförmig auf wenigstens einem teilringartig oder U-förmig ausgebildeten Magnetkern angeordnet ist, der jeweils zwei dem Werkstück zukehrbare Stirnflächen aufweist.

Derartige Ultraschall-Prüfköpfe ermöglichen die Erzeugung sowie den Empfang von linear polarisierten Transversalwellen, die vorzugsweise senkrecht unter dem Prüfkopf in das Werkstück eingeschallt bzw. aus dieser Richtung empfangen werden und vorzugsweise senkrecht zu ihrer Ausbreitungsrichtung schwingen. Technische Anwendungsgebiete derartiger Ultraschall-Prüfköpfe sind bspw. die zerstörungsfreie Prüfung elektrisch leitfähiger Werkstücke auf Materialfehler, wie bspw. Risse, insbesondere parallel zur Polarisationsrichtung der Ultraschallwelle und senkrecht zur Ausbreitungsrichtung orientierte rissartige Fehler, sowie andere auf Ultraschallgeschwindigkeit und Polarisation basierende Verfahren, wie bspw. die Spannungsmessung oder insbesondere die Dickenmessung.

### Stand der Technik

Die aus dem Stand der Technik bekannten koppelmittelfreien elektromagnetischen Prüfköpfe wandeln elektromagnetische Feldenergien in elastische Energie einer Ultraschallwelle und umgekehrt. Der Wandlungsmechanismus beruht hierbei auf den Wechselwirkungen zwischen dem elektromagnetischen Feld und einem elektrisch leitendem Material, das zudem durch ein von außen angelegtes statisches oder quasi statisches Magnetfeld durchsetzt wird. Der Begriff "quasi statisches" Magnetfeld umfasst neben einem tatsächlich statischen Magnetfeld, das bspw. mittels Permanentmagnete erzeugbar ist, auch niederfrequente Magnetfelder, deren Wechselfrequenz sehr viel kleiner ist als die Hochfrequenz, mit der die Spulenanordnung zur Erzeugung von Hochfrequenzfeldern betrieben wird.

Zur Anregung von Ultraschallwellen innerhalb eines elektrisch leitenden Werkstückes wird zumindest ein Teil des von der HF-Spulenanordnung erzeugten hochfrequenten Magnetfeldes, dessen Frequenzbereich innerhalb des Ultraschall-Frequenzbereiches liegt, in das Werkstück eingekoppelt. Diese rufen innerhalb der sogenannten Skintiefe Wirbelströme hervor, die in Überlagerung mit dem "quasi statischen" Magnetfeld aufgrund von auftretenden Lorentz-Kräften oder Magnetostriktionen innerhalb des Werkstückes Ultraschallwellen erzeugen.

Der Nachweis von innerhalb des Werkstückes auftretenden Ultraschallwellen erfolgt in umgekehrter Weise über die Detektion der induzierten elektrischen Spannung innerhalb der Spulenanordnung, die durch HF-Felder bewirkt wird, die wiederum durch Ultraschallwellen bedingte Bewegungen elektrischer Ladungen im Werkstück innerhalb des "quasi statischen" Magnetfeldes hervor gerufen werden.

Allen bekannten elektromagnetischen Ultraschallwandlern liegt das gemeinsame Entwicklungsziel zugrunde, die Messempfindlichkeit und damit verbunden die mit der Spulenanordnungen erzeugbaren Signalamplituden sowohl im Sende- alsauch im Empfangssignal zu optimieren. Hierbei gilt es zum einen, den Koppelmechanismus, mit dem die erzeugten und nachzuweisenden HF-Felder zwischen dem Ultraschallwandler und dem Werkstück ein- und ausgekoppelt werden, möglichst verlustfrei zu gestalten und zum anderen die Feldstärke des quasistatischen Magnetfeldes, die für die Erzeugung und für den Nachweis von Ultraschallwellen massgeblich ist, möglichst groß zu wählen.

Aus der DE 42 23 470 C2 geht ein gattungsgemäßer elektromagnetischer Prüfkopf für die Senkrechteinschallung von linear polarisierten Transversalwellen hervor, bei dem die HF-Magnetfelder zwischen dem Prüfkopf und dem Werkstück auf höchst effiziente Weise ein- bzw. ausgekoppelt werden, ohne dabei, wie es bei einer Vielzahl anderer Prüfköpfen der Fall ist, die zumeist als HF-Luftspulen ausgebildeten Sende- und Empfangsspulen unmittelbar auf der Werkstückoberfläche aufliegend anzuordnen. Vielmehr sieht der in der vorstehenden Druckschrift beschriebene elektromagnetische Prüfkopf gemäß Figur 2 einen halb offen ausgebildeten, kommerziell aus amorphen Bandmaterial gefertigten Ringbandkern 1 vor, der jeweils von einer Sende- 41 sowie von einer Empfangsspule 42 umwickelt ist. Die Stirnflächen 2 des halb offen ausgebildeten Ringbandkerns 1 dienen als Koppelflächen für die HF-Magnetfelder und sind in geeigneter Weise auf die Oberfläche des zu untersuchenden Werkstückes 7 auflegbar. Die durch die HF-Sendespulenanordnung 41 erzeugten HF-Magnetfelder gelangen über die Stirnflächen 2 des Ringbandkerns 1 in das Werkstück 7 und vermögen oberflächennahe Wirbelströmen 8 innerhalb der Skintiefe des Werkstückes 7 zu induzieren.

Das zur Schallwandlung notwendige senkrecht zur Oberfläche des Werkstückes 7 orientierte quasistatische Magnetfeld wird mittels zweier gleichnamiger Permanentmagnete 6 erzeugt zur Materialoberfläche des Werkstückes 7 geführt. Hierbei befindet sich die für die Ausbildung des senkrecht zur Werkstückoberfläche orientierten "quasistatischen" Magnetfeldes erforderliche Vormagnetisierungseinheit innerhalb des offenen Teils des Ringbandkems 1. Mit dieser Anordnung bilden sich innerhalb des Werkstückes Ultraschallwellen mit einer Ausbreitungsrichtung A senkrecht zur Werkstückoberfläche und einer dazu senkrechten Schwingungsebene S aus.

Eine zur vorstehenden Anordnung vergleichbare Prüfkopfvorrichtung ist der DE 41 30 935 A1 zu entnehmen, bei der jedoch die Sende- und Empfangsspulenanordnung unmittelbar auf der zu untersuchenden Werkstückoberfläche aufliegt, wodurch die Gefahr eines Spulenverschleißes gegeben ist.

Der DE 195 43 482 A1 ist eine Vorrichtung zur Prüfung von ferromagnetischen Materialien, vorzugsweise in Form von Rohrleitungen entnehmbar, die jedoch einen anderen Komponentenaufbau aufweist, als im Falle des vorstehenden, ausführlich dargelegten Standes der Technik, von dem im weiteren ausgegangen wird.

## Darstellung der Erfindung

Ausgehend von dem vorstehend genannten Stand der Technik liegt die Aufgabe zugrunde, einen gattungsgemäßen elektromagnetischen Ultraschallwandler derart auszubilden, dass die Effizienz, mit der Ultraschallwellen erzeugt werden sowie deren Nachweisempfindlichkeit gegenüber den bisher bekannten Ultraschallwandlern entscheidend gesteigert werden soll. Insbesondere gilt es darauf zu achten, die Spulenanordnung von der Werkstückoberfläche beabstandet anzuordnen, um mechanische Beeinträchtigungen der Spulenanordnung ausschließen zu können. Auch soll mit dem weitergebildeten Ultraschallwandler die Erzeugung von horizontal polarisierten Ultraschallwellen möglich sein.

Erfindungsgemäß ist ein elektromagnetischer Ultraschallwandler zur koppelmittelfreien Erzeugung und/oder zum Empfang von Ultraschallwellen in Form linearpolarisierter Transversalwellen in ein bzw. aus einem Werkstück mit wenigstens einer die Ultraschallwellen innerhalb des Werkstückes wandelnden Einheit, die eine Spulenanordnung zur Erzeugung bzw. zum Nachweis eines HF-Magnetfeldes sowie eine Vormagnetisierungseinheit zur Erzeugung eines quasi statischen Magnetfeldes aufweist, das das HF-Magnetfeld im Werkstück überlagert, wobei die Spulenanordnung torusförmig auf wenigstens einem teilringartig oder U-förmig ausgebildeten Magnetkern angeordnet ist, der jeweils zwei dem Werkstück zukehrbare Stirnflächen aufweist, derart weitergebildet, dass die dem Werkstück zukehrbaren Stirnflächen des Magnetkerns mittel- oder unmittelbar mit einem die Stirnflächen miteinander verbindenden magnetischen Flussleitstück verbunden sind, das eine dem Werkstück zugewandte Oberfläche aufweist.

Durch Vorsehen eines derartigen Flussleitstückes, das die Stirnflächen eines vorzugsweise als Ringbandkern ausgebildeten Magnetkerns miteinander verbindet, ist es insbesondere möglich, die durch die Spulenanordnung generierten HF-Magnetfelder höchsteffizient in das Werkstück einzukoppeln, um auf diese Weise stark ausgeprägte Wirbelströme innerhalb der Skintiefe generieren zu können. Hierbei weist das Flussleitstück eine vorzugsweise konform an die Werkstückoberfläche ausgebildete Oberfläche auf, so dass eine vorzugsweise konturgetreue Kontaktierung zwischen dem Flussleitstück und dem Werkstück ermöglicht wird. In einer bevorzugten Ausführungsform ist das Flussleitstück als ein rechteckiger Stab mit einer ebenen, dem Werkstück zugewandten Oberfläche ausgebildet, die bündig auf einer ebenso eben ausgebildeten Werkstückoberfläche koppelmittelfrei aufsetzbar ist. Selbstverständlich kann die dem Werkstück zugewandte Oberfläche des Flussleitstückes je nach Krümmungsverhalten des zu untersuchenden Werkstücken in einer an die Werkstückkontur angepasste Oberflächenform gefertigt werden. Soll der elektromagnetische Ultraschallwandler bspw. bevorzugt zur Untersuchung zylinderförmiger Werkstückoberflächen eingesetzt werden, so ist das die Stirnflächen des Ringbandkernes verbindende Flussleitstück in entsprechender Konturbeschaffenheit auszubilden.

Neben der optimierten Einkopplung der HF-Magnetfelder in die Werkstückoberfläche über das Flussleitstück vermag dieses ebenso das quasi statische Magnetfeld nahezu verlustfrei in das Werkstück einzukoppeln. Hierzu ist in einer typischen Ausführungsform die Vormagnetisierungseinheit zur Erzeugung des quasi statischen Magnetfeldes in Form eines Permanentmagneten ausgebildet, der unmittelbar auf dem Flussleitstück, jeweils zwischen den Stirnflächen des Ringbandkernes, der den Permanentmagneten überragt, angeordnet. Hierbei dient das Flussleitstück als eine Art Konzentrator für das quasi statische respektive permanente Magnetfeld.

Um die Ausbildung von Wirbelströmen innerhalb des Flussleitstückes zu vermeiden, bietet es sich an, das Flussleitstück aus einem elektrisch nicht leitfähigen Trägermaterial auszubilden, in dem matrixartig weichmagnetische Partikel eingebracht sind. Alternativ vermag auch eine stapelförmige Anordnung aus weichmagnetischen Transformatorblechen die Ausbildung von Wirbelströmen innerhalb des Flussleitstückes wirksam zu vermeiden.

Neben der vorstehend beschriebenen erfindungsgemäßen Ausbildung eines elektromagnetischen Ultraschallwandlers, dessen teilringartig oder U-förmig ausgebildeter Magnetkern ein einzelnes magnetisches Flussleitstück überragt, wobei die Stirnflächen des Magnetkerns mit dem einzigen Flussleitstück innig verbunden sind, sieht ein zweites, alternatives erfindungsgemäßes Ausführungsbeispiel für einen elektromagnetischen Ultraschallwandler wenigstens zwei parallel nebeneinander angeordnete Flussleitstücke vor, die brückenartig von wenigstens zwei teilringartig oder U-förmig ausgebildeten Magnetkernen über ihre jeweiligen Stirnflächen verbunden sind. Die Magnetkerne befinden sich voneinander beabstandet an den sich gegenüberliegenden Endbereichen der stabförmig ausgebildeten Flussleitstücke. Diese Bauweise erlaubt es die vorzugsweise als Permanentmagnetanordnung ausgebildete Vormagnetisierungseinheit zwischen beiden Magnetkernen längs beider Flussleitstücke anzubringen ohne jeweils von den vorzugsweise als Ringbandkernen ausgebildeten Magnetkernen überspannt zu werden, wie es beim vorstehend geschilderten Ausführungsbeispiel der Fall ist. Dies führt letztlich dazu, dass eine nahezu unbeschränkte Größenskalierung der Permanentmagnetanordnung möglich wird, wodurch die Magnetfeldstärke entsprechend vergrößerbar ist.

Neben der einfachsten Ausbildungsform des mit wenigstens einer Spulenanordnung umwickelten Magnetkerns in Form eines Ringbandkernes sind auch Magnetkerne mit einem M-förmigen Magnetkernquerschnitt denkbar, mit jeweils drei frei endenden Stirnflächen. Mit derartigen Magnetkernen lassen sich vergleichbar zur vorstehenden elektromagnetischen Ultraschallwandleranordnung jeweils drei parallel nebeneinanderliegende magnetische Flussleitstücke brückenartig miteinander verbinden.

Wie im weiteren unter Bezugnahme auf die nachstehenden Ausführungsbeispiele im einzelnen ausgeführt wird, ist es möglich, bei geeigneter Zusammenstellung mehrerer der vorstehend beschriebenen Ultraschallwandler sowie Ansteuerung der jeweils auf den Magnetkernen torusförmig aufgebrachten Spulenanordnungen, linearpolarisierte Transversalwellen innerhalb des Werkstückes zu generieren. Insbesondere ermöglichen entsprechende Mehrfachanordnungen aus den erfindungsgemäß ausgebildeten elektromagnetischen Ultraschallwandlern die Erzeugung von vertikal oder horizontal linearer polarisierten Transversalwellen.

Hierzu lassen sich die eingangs beschriebenen, erfindungsgemäß ausgebildeten elektromagnetischen Ultraschallwandler in Vielfachanordnung nebeneinander plazieren, um einerseits eine möglichst große Sende- sowie Empfangsapertur sowie um andererseits durch phasengesteuerte HF-Anregung der einzelnen Spulenanordnungen eine gezielt einstellbare Abstrahlcharakteristik für die in das Werkstück einkoppelbaren Ultraschallwellen zu erhalten. Wie im weiteren noch ausgeführt wird, eignen sich derartige Anordnungen für eine Phased-Array-Anordnung zur Erzeugung horizontal polarisierter Transversalwellen (SH-Wellen), deren Ausbreitungsrichtung gezielt einstellbar ist, die bezogen zur Normalen der Werkstückoberfläche einen variablen Winkel zwischen 0° und 90° einschließt.

## Kurze Beschreibung der Erfindung

Die Erfindung wird nachstehend ohne Beschränkung des allgemeinen Erfindungsgedankens anhand von Ausführungsbeispielen unter Bezugnahme auf die Zeichnung exemplarisch beschrieben. Es zeigen:

Fig. 1 elektromagnetischer Ultraschallwandler mit einem einzigen Flussleitstück,

Fig. 2 elektromagnetischer Ultraschallwandler nach dem Stand der Technik,

Fig. 3 Anordnung aus einer Vielzahl einzelner elektromagnetischer Ultraschallwandler nach Ausführung gemäß Figur 1,

Fig. 4 schematisierte Darstellung des durch die Anordnung gemäß Figur 3 erzeugten Ultraschallwellenfeldes innerhalb eines Werkstückes,

Fig. 5 elektromagnetischer Ultraschallwandler mit zwei Flussleitstücken, die brückenartig von jeweils zwei halbringförmigen Magnetkernen überspannt sind,

Fig. 6 Anordnung einer Vielzahl elektromagnetischer Ultraschallwandler gemäß Figur 5 sowie

Fig. 7 im Querschnitt M-förmig ausgebildete Magnetkerne, die jeweils brückenartig drei magnetische Flussleitstücke überspannen.

## Wege zur Ausführung der Erfindung, gewerbliche Verwendbarkeit

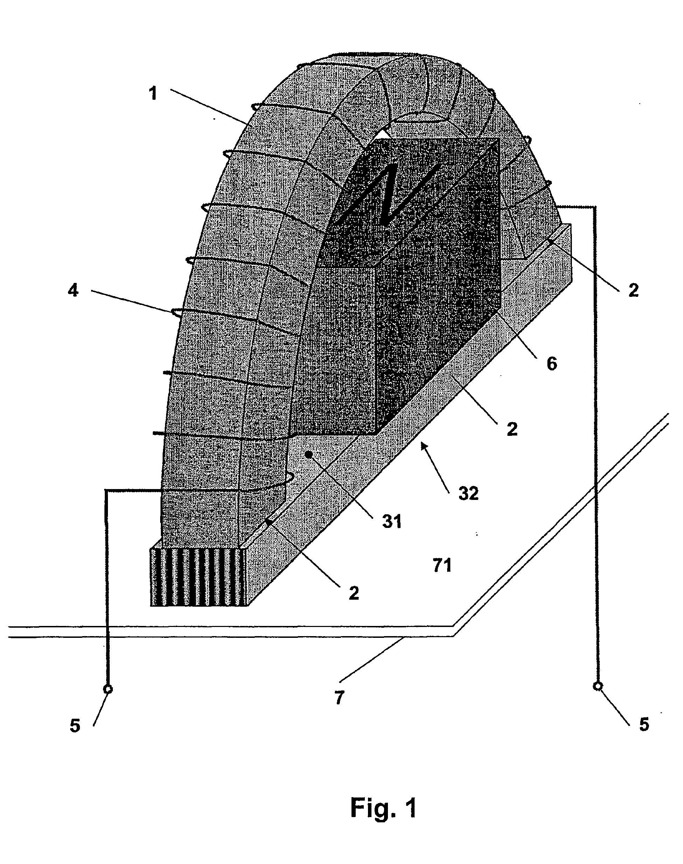

In Figur 1 ist die einfachste Ausführungsform eines erfindungsgemäß ausgebildeten elektromagnetischen Ultraschallwandlers dargestellt, der als teilringartig ausgebildeter Magnetkern einen halbierten Ringbandkern 1 aufweist, dessen zwei Stirnflächen 2 unmittelbar mit einem im Querschnitt rechteckförmig ausgebildeten, stabförmigen Flussleitstück 3 verbunden ist. Um den halbierten Ringbandkern 1 ist torusförmig eine Spulenanordnung 4 gewickelt, die über zwei Anschlusskontakte 5 verfügt. Unmittelbar auf der Oberfläche 31 des Flussleitstückes 3 ist eine Vormagnetisierungseinheit 6 vorgesehen, die im gezeigten Ausführungsbeispiel als Permanentmagnet ausgebildet ist und stilisiert über eine Nordpolung verfügt. Hierbei überragt der Ringbandkern 1 den Permanentmagneten 6 vollständig. Ebenfalls stilisiert dargestellt ist das mit Hilfe der elektromagnetischen Ultraschallwandleranordnung zu untersuchende Werkstück 7, auf dessen Oberfläche 71 das Flussleitstück 3 mit seiner der dem Werkstück 7 zugewandten Oberfläche 32 vorzugsweise konturgetreu auflegbar ist. Somit tritt das durch den Permanentmagnet 6 erzeugte Magnetfeld senkrecht durch das Flussleitstück 3 über die Werkstückoberfläche 71 in das Werkstück 7 ein. Alternativ zur Ausbildung der Vormagnetisierungseinheit in Form eines Permanentmagneten 6, wie in Figur 1 dargestellt, ist es ebenso denkbar, die Vormagnetisierungseinheit in Form eines Elektromagneten auszubilden, dessen Feldlinien in gleicher Weise wie in der in Figur 1 dargestellten Anordnung senkrecht zur Werkstückoberfläche in das Werkstück eintreffen. Ebenso ist es jedoch auch möglich, einen Elektromagneten derart zu positionieren, so dass das durch den Elektromagneten hervorgerufene Magnetfeld parallel zur Werkstückoberfläche in das Werkstück eintritt. Auf die mit einer derartigen Magnetfeldausrichtung verbundenen Auswirkungen wird im weiteren eingegangen.

Der in Figur 1 dargestellte elektromagnetische Ultraschallwandler ist als elektromagnetischer Linienwandler anzusehen, der sowohl als Ultraschallsender sowie auch als Ultraschallempfänger betreibbar ist. Im Sendefall sind die Anschlusskontakte 5 mit einem HF-Generator verbunden, im Empfangsfall hingegen mit einem entsprechenden Verstärker und einer nachgeschalteten Auswerteeinheit. Selbstverständlich ist es möglich, längs eines einzigen halbierten Ringbandkernes zwei getrennte Spulenanordnungen vorzusehen, von denen eine als Sende- und die andere als Empfangsspule dient.

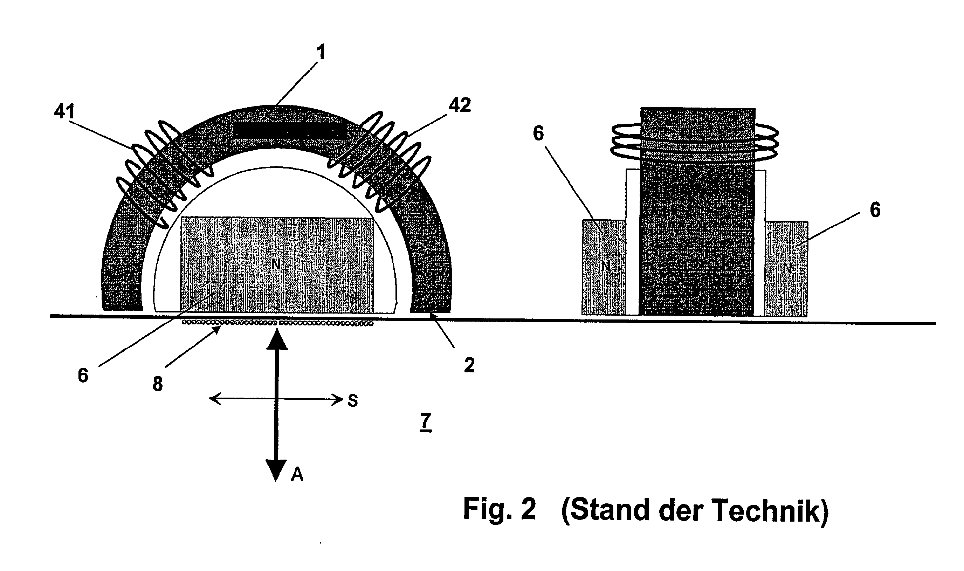

Aufgrund des großflächigen Kontaktes zwischen der Oberseite 32 des Flussleitstückes 3 und der Werkstückoberfläche 71 des Werkstückes 7 koppeln die längs des Flussleitstückes 3 geführten HF-Magnetfelder längs der gesamten Erstreckung des Flussleitstückes 3 in das Werkstück 7 ein und rufen innerhalb der Skintiefe intensive Wirbelströme hervor. Diese wiederum treten in Wechselwirkung mit dem die Werkstückoberfläche 71 durchdringenden quasi stationären Magnetfeld und erzeugen aufgrund sich ausbildender Lorentzkräfte sowie Magnetostriktionen Ultraschallwellen mit einer Frequenz, die der Wechselfrequenz der HF-Magnetfelder entsprechen. Durch den innigen Kontakt zwischen dem Flussleitstück 3 und der Werkstückoberfläche 71 wird ein höherer magnetischer Fluss innerhalb des Werkstückes 7 hervorgerufen, als es mit den bisher bekannten elektromagnetischen Ultraschallwandlern, bspw. dargestellt in Figur 2, der Fall ist. Auf diese Weise lässt sich die Effektivität sowohl in der Erzeugung von Ultraschallwellen alsauch die Sensitivität im Empfangsfalle erheblich steigern.

Mit dem in Figur 1 dargestellten Ausführungsbeispiel eines elektromagnetischen Ultraschallwandlers, bei dem das quasi statische Magnetfeld senkrecht die Werkstückoberfläche 71 durchdringt, lassen sich linear polarisierte Transversalwellen erzeugen, deren Ausbreitungsrichtung senkrecht zur Werkstückoberfläche orientiert ist und die eine senkrecht zur Ausbreitungsrichtung orientierte Schwingungsebene aufweisen.

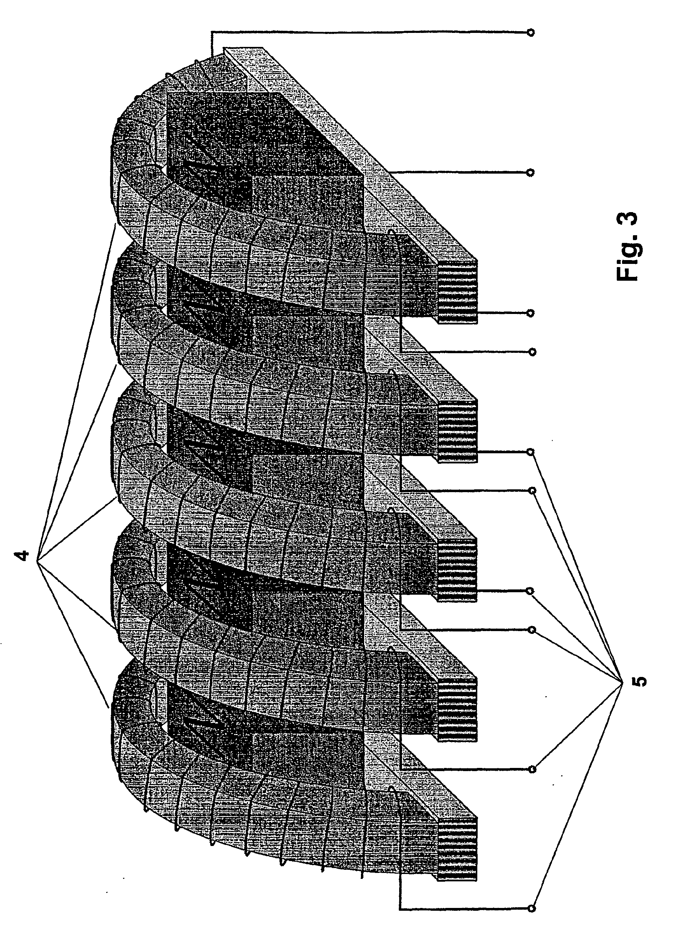

Zur gezielten Anregung sog. horizontal polarisierter Transversalwellen (SH-Wellen) wird in an sich bekannter Weise eine Vormagnetisierungseinheit benötigt, meist in Form einer Anordnung von Permanentmagneten mit alternierender Polarität, deren alternierende Magnetfelder in Überlagerung mit einem HF-Magnetfeld innerhalb des Werkstückes gebracht werden. Eine erfindungsgemäß ausgebildete Anordnung zur Erzeugung horizontal polarisierter Transversalwellen ist in Figur 3 dargestellt, die in dem gezeigten Ausführungsbeispiel fünf parallel nebeneinander angeordnete elektromagnetische Linienwandler gemäß dem in Figur 1 dargestellten Beispiel aufweisen. Es sei angenommen, dass die in Figur 3 stilisiert angedeuteten Spulenanordnungen 4 auf jeder der einzeln dargestellten Ultraschallwandler sowohl für die Erzeugung alsauch für den Empfang von Ultraschallwellen ausgelegt sind. Sind die elektrischen Anschlüsse 5 der einzelnen Spulenanordnungen 4 für den Sende- und Empfangsfall an getrennten Elektronikkanälen eine HF-Generators bzw. entsprechenden Verstärkers mit Auswerteeinheit verbunden und werden die einzelnen Elektronikkanäle jeweils in ihrer Ansteuerphase zeitverzögert betrieben, so lässt sich mit der in Figur 3 dargestellten Anordnung eine Phased-Array-Anordnung realisieren, die in Art eines Gruppenstrahlers horizontal polarisierte Transversalwellen innerhalb eines Werkstückes zu erzeugen sowie nachzuweisen vermag. Hierbei werden jeweils benachbart angeordnete Ultraschallwandler mit einem jeweils entgegengesetzt im Flussleitstück gerichteten magnetischen Fluss betrieben, wodurch eine alternierende Ausbildung von Wirbelstromrichtungen unterhalb jeweils benachbarter Flussleitstücke generiert werden, die zu jeweils entgegengesetzt gerichteten Lorentzkräften und damit verbundenen Magnetostriktionsrichtungen führen und auf diese Weise Scherkräfte zur Erzeugung horizontal polarisierter Transversalwellen innerhalb des Werkstückes hervorrufen.

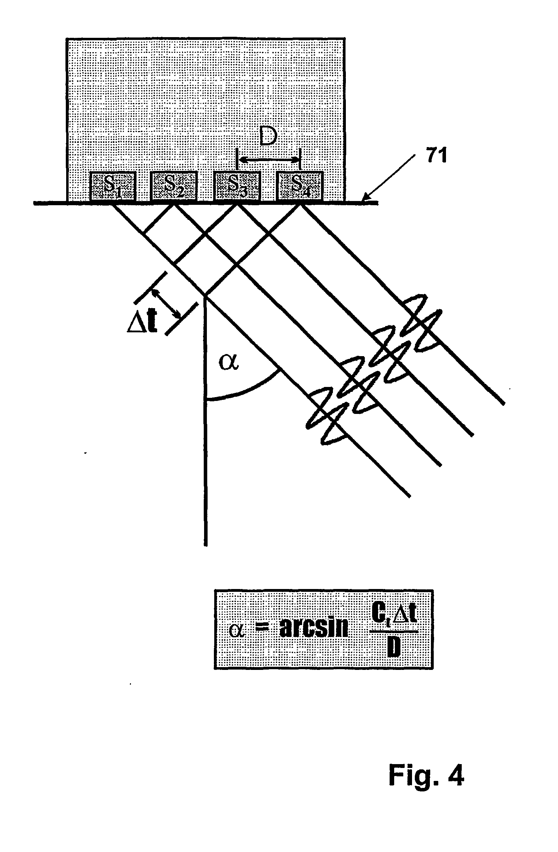

Durch geeignete Wahl der phasenabhängigen Ansteuerung der einzelnen, in nebeneinander in Reihe angeordneten Ultraschallwandlern lässt sich die Richtcharakteristik der sich innerhalb des Werkstückes ausbildenden horizontal polarisierten Transversalwelle derart gezielt einstellen, so dass die Hauptausbreitungsrichtung der Hauptkeule der horizontal polarisierten Transversalwelle einen Winkel $\alpha$ zur Oberflächennormale der Werkstückoberfläche einschließt, der zwischen 0° und 90° beliebig wählbar ist. In Figur 4 ist hierzu eine veranschaulichende Skizze zur Erzeugung horizontal polarisierter Transversalwellen mit Hilfe der in Figur 3 dargestellten Ultraschallwellenanordnung dargestellt. Es sei angenommen, dass vier Ultraschallwandler $S_1$-$S_4$ nebeneinander mit einem gegenseitigen Abstand D auf der Werkstückoberfläche 71 angeordnet sind. Die einzelnen Ultraschallwandler $S_1$-$S_4$ werden mit jeweils einem zeitlichen Abstand $\Delta t$ mit einem Strompuls in der vorstehen beschriebenen Weise beaufschlagt. Aufgrund der phasenverzögerten Bestromung der vier Ultraschallwandler $S_1$-$S_4$ bilden sich innerhalb des Werkstückes 7 horizontal polarisierte Transversalwellen aus, die eine Hauptausbreitungsrichtung aufweisen, die mit der Normalen zur Werkstückoberfläche einen Winkel $\alpha$ einschließen, für den gilt:

$$\alpha = \sin \frac{c_t \cdot \Delta t}{D}$$

In obiger Beziehung bedeutet $c_t$ die im Werkstück für die horizontal polarisierte Transversalwelle geltende Ausbreitungsgeschwindigkeit. Somit zeigt sich, dass bei einer phasensynchronen Ansteuerung aller vier Ultraschallwandler, d. h. $\Delta t = 0$, $\alpha$ gleich Null wird, so dass die horizontal polarisierten Transversalwellen senkrecht zur Werkstückoberfläche in das Werkstück abgestrahlt werden. Werden die einzelnen Ultraschallwandler mit einer Phasenzeitverzögerung Δt betrieben, während der eine Ultraschallwelle bspw. vom Ultraschallwandler S1 zum Wandler S2 gelangt, also die Wegstrecke D zurücklegt, so schließt die Hauptkeule der sich innerhalb des Werkstückes ausbildenden horizontal polarisierten Transversalwelle mit der Normalen zur Werkstückoberfläche einen Winkel α von 90° ein. Je nach Wahl von Δt lässt sich somit die Hauptkeule beliebig 0° und 90° innerhalb des Werkstückes schwenken.

Die vorstehenden Ausführungen, die sich auf den Sendebetrieb beziehen, lassen sich in umgekehrter Weise ebenso auch für den Empfang von SH-Wellen aus einem Werkstück übertragen.

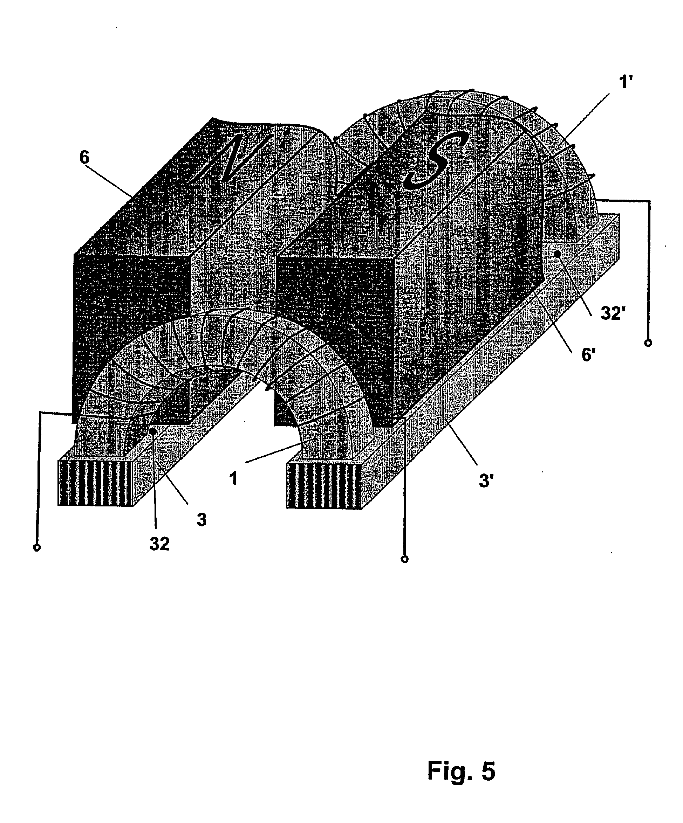

Eine weitere Ausführungsform für einen erfindungsgemäß ausgebildeten elektromagnetischen Ultraschallwandler ist in Figur 5 dargestellt. Der Wandler weist zwei parallel beabstandet angeordnete magnetische Flussleitstücke 3, 3' auf, deren Oberseiten 32, 32' mit den Stirnseiten zweier halbkreisförmig ausgebildeter Ringbandkerne 1, 1' verbunden sind. Beide Flussleitstücke 3, 3' sind somit durch die Ringbandkerne 1, 1' brückenartig miteinander verbunden. Überdies weist das in Figur 5 dargestellte Ausführungsbeispiel zwei gegenpolige Permanentmagnete 6, 6' auf, die auf den jeweiligen Flussleitstücken 3, 3' aufsitzen. Die Ansteuerung der Spulenanordnungen der einzelnen Ringbandkerne 1, 1' erfolgt derart, dass in den Flussleitstücken 3, 3' gegensätzlich gerichtete dynamische Magnetfelder entstehen, die zu Wirbelströmen im Werkstück führen, die senkrecht zur Längsausdehnung der Flussleitstücke 3, 3' und ebenfalls zueinander entgegengesetzt orientiert sind. Aufgrund der ungleichpoligen Permanentmagnete 6, 6' bilden sich unter den Flussleitstücken innerhalb der Skintiefe des Werkstückes gleichgerichtete Scherkräfte aus, wodurch linear polarisierte Transversalwellen mit senkrecht zur Werkstückoberfläche ausbreitende Ultraschallwellen entstehen. Die in Figur 5 dargestellte Anordnung ist somit als Normalprüfkopf anzusehen, für die Erzeugung und Nachweis linear polarisierter Transversalwellen mit großer Apertur, vergleichbar jener, die nur einen einzigen elektromagnetischen Linienwandler aufweist nach Bauart des in Figur 1 dargestellten Ausführungsbeispiels.

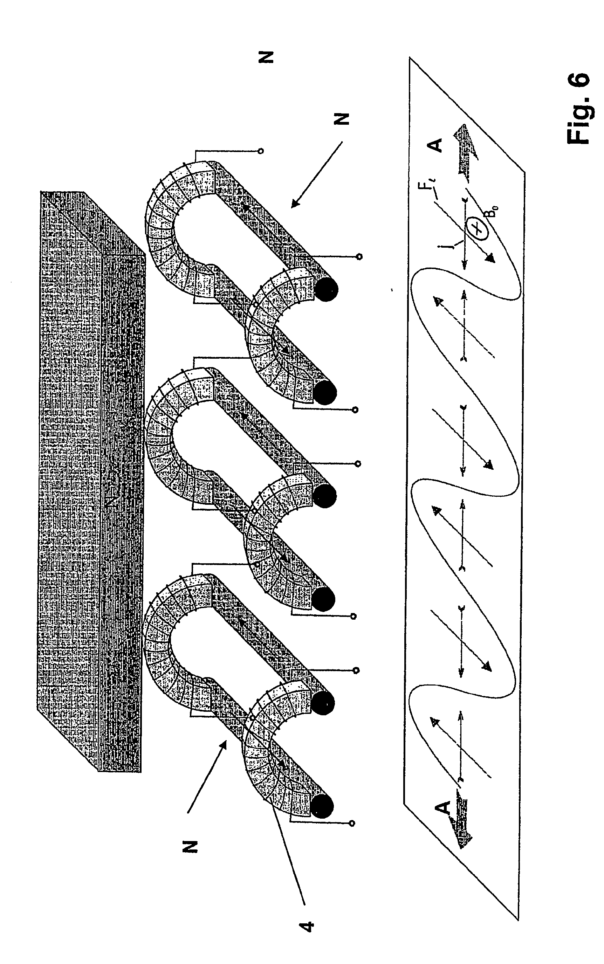

In Figur 6 ist eine Anordnung aus drei nebeneinander angeordneten Normalprüfköpfen dargestellt, gemäß dem Grundaufbau des in Figur 5 gezeigten Ultraschallwandlers. Die drei nebeneinander angeordneten Normalprüfköpfe N sind mit ihren zugehörigen HF-Spulen 4 derart geschaltet, dass jeweils in benachbarten Flussleitstücken 3 die Richtung der dynamischen Magnetfelder entgegengesetzt orientiert sind, d. h. es besteht eine Phasendifferenz von 180° zwischen jeweils unmittelbar benachbarten HF-Magnetfeldern. Durch einen derart orientierten, jeweils entgegengesetzt gerichteten magnetischen Fluss der dynamischen Magnetfelder werden im Sendefall in der Werkstückoberfläche Wirbelströme eingekoppelt, die senkrecht zur Richtung der dynamischen Magnetfelder orientiert sind. Bei Überlagerung eines einheitlichen statischen Magnetfeldes führen die Wirbelströme j unmittelbar unterhalb der jeweiligen Flussleitstücke 3 zu Lorentzkräften $F_I$, die jeweils unmittelbar unterhalb benachbarter Flussleitstücke entgegengesetzt gerichtet sind und somit Scherkräfte innerhalb des Werkstückes hervorrufen, durch die SH-Transversalwellen erzeugt werden. Die Spulwellenlänge, die der halben Schwingungswellenlänge der SH-Welle entspricht, ist durch den gegenseitigen Abstand unmittelbar benachbarter Flussleitstücke bestimmt. Die Abstrahlrichtung der SH-Wellen ist mit der in Figur 6 dargestellten Anordnung senkrecht zu den einzelnen Flussleitstücken 3 orientiert, die auch durch die jeweils entgegengesetzt gerichteten Pfeile A gemäß Figur 6 angedeutet ist.

Die in Figur 6 dargestellte Anordnung besteht auch insbesondere in der gezielten Verwendung eines großflächigen unipolaren Magneten 6, der entscheidend das störende Barkhausen-Rauschen im Bereich der einzelnen Wandlerelemente zu unterdrücken vermag.

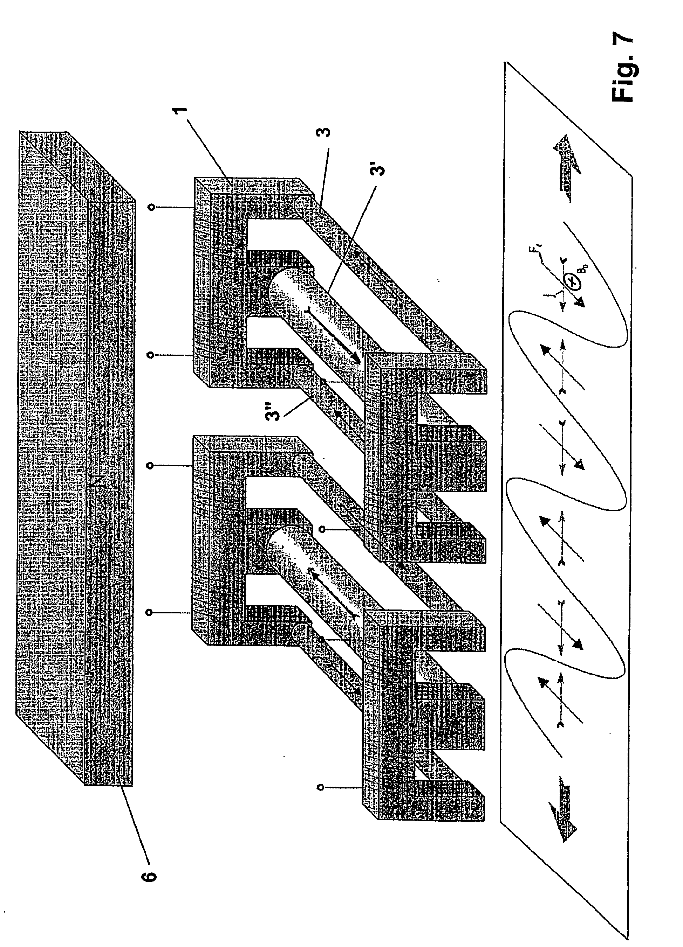

In Figur 7 ist eine der Anordnung gemäß Figur 6 sehr ähnliche Anordnung zur Erzeugung von SH-Wellen dargestellt. Im Unterschied zur Figur 6 sind die in Figur 7 eingesetzten Ringbandkernsegmente 1 in Form m-förmiger Spulenkerne ausgebildet, wobei jeweils zwei m-förmige Spulenkerne mit jeweils 3 Flussleitstücken 3, 3', 3" beschaltet sind. Die um die Spulenkerne 1 vorgesehene Spulenanordnungen werden derart beschaltet, so dass längs der sich parallel nebeneinander befindlichen Flussleitstücke jeweils entgegengesetzt gerichtete HF-Magnetfelder ausbilden, die in Überlagerung mit einem senkrecht zur Werkstückoberfläche orientierten statischen Magnetfeldes, das von einem unipolaren Permanentmagneten 6 herrührt, der die drei Normalprüfköpfe N gesamtheitlich überdeckt, innerhalb des Werkstückes zu jeweils entgegengesetzt gerichteten Wirbelströmen unterhalb unmittelbar benachbarter Flussleitstücke führen, durch die wiederum entgegengesetzt gerichtete Lorentzkräfte hervorgerufen werden, die letztlich die für die Erzeugung horizontal polarisierter Transversalwellen erforderlichen Scherkräfte verantwortlich sind.

**Bezugszeichenliste**

| | |
|---|---|
| 1 | Ringbandkern |
| 2 | Stirnfläche |
| 3 | Flussleitstück |
| 31, 32 | Oberflächen des Flussleitstückes |
| 4 | Spulenanordnung |
| 41 | Sendespule |
| 42 | Empfangsspule |
| 5 | Elektrische Kontakte |
| 6 | Permanentmagnet |
| 7 | Werkstück |
| 71 | Werkstückoberfläche |
| 8 | Wirbelstrom |

**Patentansprüche**

1. Elektromagnetischer Ultraschallwandler **dadurch gekennzeichnet, dass** die dem Werkstück zukehrbaren Stirnflächen des Magnetkerns mittel- oder unmittelbar mit einem die Stirnflächen miteinander verbindenden magnetischen Flussleitstück verbunden sind, das eine dem Werkstück zugewandte Oberfläche aufweist.

2. Elektromagnetischer Ultraschallwandler zur koppelmittelfreien Erzeugung und/ oder zum Empfang von Ultraschallwellen in Form linear polarisierter Transversalwellen in ein bzw. aus einem Werkstück mit wenigstens einer die Ultraschallwellen innerhalb des Werkstückes wandelnden Einheit, die eine Spulenanordnung zur Erzeugung bzw. zum Nachweis eines HF-Magnetfeldes sowie eine Vormagnetisierungseinheit zur Erzeugung eines quasistatischen Magnetfeldes aufweist, das im Gebrauch das HF-Magnetfeld im Werkstück überlagert, wobei die Spulenanordnung torusförmig auf wenigstens einem teilringartig oder U-förmig ausgebildeten Magnetkern angeordnet ist, der jeweils zwei dem Werkstück zukehrbare Stirnflächen aufweist, **dadurch gekennzeichnet, dass** wenigstens zwei Magnetkerne sowie wenigstens zwei magnetische Flussleitstücke vorgesehen sind, dass eine Stirnfläche eines Magnetkerns mit einem der wenigstens zwei magnetischen Flussleitstücke mittel- oder unmittelbar und die andere Stirnfläche des einen Magnetkerns mit dem anderen der wenigstens zwei magnetischen Flussleitstücke mittel- oder unmittelbar verbunden sind, dass eine Stirnfläche des anderen Magnetkerns mit dem einen der wenigstens zwei magnetischen Flussleitstücke mittel- oder unmittelbar und die andere Stirnfläche des anderen Magnetkerns mit dem anderen der wenigstens zwei magnetischen Flussleitstücke jeweils beabstandet vom ersten Magnetkern mittel- oder unmittelbar verbunden sind, und dass die magnetischen Flussleitstücke jeweils eine dem Werkstück zugewandte Oberfläche aufweisen.

3. Elektromagnetischer Ultraschallwandler nach Anspruch 2, **dadurch gekennzeichnet, dass** die wenigstens zwei Magnetkerne jeweils U-förmig ausgebildet sind und jeweils zwei über einen Verbindungsteil verbundene Längsschenkel aufweisen, an deren Enden die Stirnflächen vorgesehen sind, dass jeweils zwischen den Längsschenkeln wenigstens ein weiteres Längselement, das einseitig mit dem Verbindungsteil verbunden ist, vorgesehen ist, an dessen Ende eine weitere Stirnfläche vorgesehen ist, und dass wenigstens ein weiteres magnetisches Flussleitstück die Stirnflächen der Längselemente beider Magnetkerne miteinander verbindet.

4. Elektromagnetischer Ultraschallwandler nach Anspruch 1 oder 2, **dadurch gekennzeichnet, dass** zur Erzeugung von Ultraschallwellen die Spulenanordnung mit einem HF-Generator zur Erzeugung von HF-Magnetfeldern verbunden ist.

5. Elektromagnetischer Ultraschallwandler nach Anspruch 1 oder 2, **dadurch gekennzeichnet, dass** zum Nachweis von Ultraschallwellen die Spulenanordnung mit einer Verstärkereinheit und/oder einer Auswerteeinheit verbunden ist.

6. Elektromagnetischer Ultraschallwandler nach Anspruch 1 oder 2, **dadurch gekennzeichnet, dass** die Spulenanordnung zwei getrennte Spulen vorsieht, eine Sendespulenanordnung zur Erzeugung eines HF-Magnetfeldes, die mit einem HF-Generator verbunden ist, sowie eine Empfangsspulenanordnung zum Nachweis eines HF-Magnetfeldes, die mit einer Verstärkereinheit und/oder einer Auswerteeinheit verbunden ist.

7. Elektromagnetischer Ultraschallwandler nach einem der Ansprüche 1 bis 6, **dadurch gekennzeichnet, dass** das magnetische Flussleitstück stabförmig ausgebildet ist und weichmagnetisches Material enthält.

8. Elektromagnetischer Ultraschallwandler nach einem der Ansprüche 1 bis 7, **dadurch gekennzeichnet, dass** das magnetische Flussleitstück aus einer stapelförmigen Anordnung weichmagnetischer Plattenelemente besteht oder aus einem elektrisch nichtleitfähigem Material gefertigt ist, in dem weichmagnetische Partikel matrixförmig verteilt enthalten sind.

9. Elektromagnetischer Ultraschallwandler nach einem der Ansprüche 1 bis 8, **dadurch gekennzeichnet, dass** die Stirnflächen des Magnetkerns fest mit dem magnetischen Flussleitstück verfügt ist.

10. Elektromagnetischer Ultraschallwandler nach einem der Ansprüche 1 bis 9, **dadurch gekennzeichnet, dass** mittel- oder unmittelbar auf einer dem Werkstück abgewandten Oberseite des wenigstens einen magnetischen Flussleitstückes die Vormagnetisierungseinheit vorgesehen ist.

11. Elektromagnetischer Ultraschallwandler nach einem der Ansprüche 1 bis 10, **dadurch gekennzeichnet, dass** die Vormagnetisierungseinheit eine Permanent- oder eine Elektromagnetanordnung ist.

**12.** Elektromagnetischer Ultraschallwandler nach einem der Ansprüche 1 bis 12, **dadurch gekennzeichnet, dass** die Vormagnetisierungseinheit derart angeordnet ist, dass das quasistatische Magnetfeld senkrecht zur Werkstückoberfläche in das Werkstück einleitbar ist.

**13.** Elektromagnetischer Ultraschallwandler nach einem der Ansprüche 1 bis 10, **dadurch gekennzeichnet, dass** die Vormagnetisierungseinheit eine Elektromagnetanordnung ist, durch die ein quasistatisches Magnetfeld horizontal zur Werkstückoberfläche in das Werkstück einleitbar ist.

**14.** Anordnung zur koppelmittelfreien Erzeugung und/oder zum Empfang von Ultraschallwellen in Form linear polarisierter Transversalwellen in ein bzw. aus einem Werkstück,
**dadurch gekennzeichnet, dass** wenigstens zwei elektromagnetische Ultraschallwandler nach einem der Ansprüche 1 bis 3 beabstandet derart nebeneinander angeordnet sind, dass die Längsrichtungen der jeweiligen magnetischen Flussleitstücke der einzelnen Ultraschallwandler parallel zueinander ausgerichtet sind.

**15.** Anordnung nach Anspruch 14,
**dadurch gekennzeichnet, dass** die Vormagnetisierungseinheiten der einzelnen Ultraschallwandler gleichpolig sind, oder
dass sich eine einzige Vormagnetisierungseinheit über alle magnetischen Flussleitstücke der nebeneinander angeordneten Ultraschallwandler erstreckt.

**16.** Verwendung der Anordnung nach einem den Ansprüche 14 oder 15 zur Erzeugung und/oder Nachweis von horizontal polarisierten Transversalwellen
**dadurch gekennzeichnet, dass** die Spulenanordnungen der wenigstens zwei elektromagnetischen Ultraschallwandler mittels einer Phased-Array-Ansteuerung betrieben werden.

**17.** Verwendung nach Anspruch 16,
**dadurch gekennzeichnet, dass** die Spulenanordnungen aller elektromagnetischer Ultraschallwandler nacheinander mit einem in der Phase zeitverzögerten Ansteuersignal derart angesteuert werden, dass im Falle der Erzeugung von Ultraschallwellen die in das Werkstück eintretenden Ultraschallwellen eine von der Phasenansteuerung abhängige Richtcharakteristik aufweisen, deren Hauptausbreitungsrichtung bezogen auf die Normale zur Werkstückoberfläche 0° und 90° schwenkbar ist.

**18.** Verwendung nach Anspruch 16 oder 17,
**dadurch gekennzeichnet, dass** im Wege der Erzeugung von Ultraschallwellen innerhalb des Werkstückes die Spulenanordnungen der einzelnen Ultraschallwandler derart angesteuert werden, dass zwei unmittelbar benachbart liegende magnetische Flussleitstücke jeweils von einem magnetischen Fluss durchsetzt werden, die zueinander entgegengerichtet orientiert sind.

**Claims**

**1.** An electromagnetic ultrasonic transducer for coupling-medium-free generation and/or reception of ultrasonic waves in the form of linearly polarized transverse waves in a, respectively from a workpiece having at least one unit which converts said ultrasonic waves inside said workpiece and which is provided with a coil arrangement for generating, respectively detecting a high-frequency magnetic field as well as with a premagnetizing unit for generating a quasi-static magnetic field which when used is superimposed over said high-frequency magnetic field in said workpiece, with said coil arrangement being disposed in a torus-shaped manner on at least one partially toroidal or U-shaped magnetic core, which has two front ends which can be turned to face said workpiece,
**characterized in that** said front ends of said magnetic core which can be turned to face said workpiece are connected directly or indirectly with a magnetic flux piece which has a surface which faces said workpiece and joins said front ends with each other.

**2.** An electromagnetic ultrasonic transducer transducer for coupling-medium-free generation and/or reception of ultrasonic waves in the form of linearly polarized transverse waves in a, respectively from a workpiece having at least one unit which converts said ultrasonic waves inside said workpiece and which is provided with a coil arrangement for generating, respectively detecting a high-frequency magnetic field as well as with a premagnetizing unit for generating a quasi-static magnetic field which when used is superimposed over said high-frequency magnetic field in said workpiece, with said coil arrangement being disposed in a torus-shaped manner on at least one partially toroidal or U-shaped magnetic core, which has two front ends which can be turned to face said workpiece,
**characterized in that** at least two magnetic cores and at least two magnetic flux guide pieces are provided,
a front end of a magnetic core is connected directly or indirectly with one of the at least two magnetic flux guide pieces and the other front end of a magnetic core is connected directly or indirectly to the other of the at least two magnetic flux guide pieces,
a front end of the other magnetic core is connected directly or indirectly to one of the at least two magnetic flux guide pieces and the other front end of the other magnetic core is connect directly or indirectly with the other flux guide pieces located at distance from the first magnetic core, and

the magnetic flux guide pieces each have a surface facing the workpiece.

3. An electromagnetic ultrasonic transducer according to claim 2,

**characterized in that** the at least two magnetic cores are each designed U-shaped and each have two longitudinal limbs connected via a connection part, front ends are provided at the ends of the two longitudinal limbs,

between the longitudinal limbs at least one further longitudinal element is provided which is connected on one side to the connection part at the end of which a further front end is provided, and

at least one further magnetic flux guide piece joins the front ends of the longitudinal elements of both magnetic cores with each other.

4. An electromagnetic ultrasonic transducer according to claim 1 or 2,

**characterized in that** to generate ultrasonic waves the coil arrangement is connected to a high-frequency generator to generate high-frequency magnetic fields.

5. An electromagnetic ultrasonic transducer according to claim 1 or 2,

**characterized in that** to detect ultrasonic waves the coil arrangement is connected to an amplifier unit and/or an evaluation unit.

6. An electromagnetic ultrasonic transducer according to claim 1 to 2,

**characterized in that** the coil arrangement provides two separated coils, a transmitting coil arrangement to generate a high-frequency magnetic field which is connected to a high-frequency generator and a receiving coil arrangement for detecting a high-frequency magnetic field which is connected to an amplifier unit and/or an evaluation unit.

7. An electromagnetic ultrasonic transducer according to one of the claims 1 to 6,

**characterized in that** the magnetic flux guide piece is designed rod-shaped and contains soft magnetic material.

8. An electromagnetic ultrasonic transducer according to one of the claims 1 to 7,

**characterized in that** the magnetic flux guide piece comprises a rod-shaped arrangement of soft magnetic board elements or is made of an electrically nonconductive material containing the soft magnetic particles distributed in the form of a matrix.

9. An electromagnetic ultrasonic transducer according to one of the claims 1 to 8,

**characterized in that** the front ends of the magnetic core are firmly fused with the magnetic flux guide piece.

10. An electromagnetic ultrasonic transducer according to one of the claims 1 to 9,

**characterized in that** the premagnetizing unit is provided directly or indirectly on an upper side of the at least one magnetic flux guide piece facing away from the workpiece.

11. An electromagnetic ultrasonic transducer according to one of the claims 1 to 10,

**characterized in that** the premagnetizing unit is a permanent or an electromagnetic arrangement.

12. An electromagnetic ultrasonic transducer according to one of the claims 1 to 11,

**characterized in that** the premagnetizing unit is disposed in such a manner that the quasi-static magnetic field can be introduced into the workpiece perpendicular to the surface of the workpiece.

13. An electromagnetic ultrasonic transducer according to one of the claims 1 to 10,

**characterized in that** the premagnetizing unit is an electromagnetic arrangement by means of which a quasi-static magnetic field can introduced into the workpiece horizontally to the surface of the workpiece.

14. An arrangement for coupling-medium-free generation and/or for receiving ultrasonic waves in the form of linearly polarized transverse waves in a, respectively from a workpiece,

**characterized in that** at least two electromagnetic ultrasonic transducers according to one of the claims 1 to 3 are disposed at a distance to each other in such a manner that the longitudinal direction of the respective magnetic flux guide pieces of the individual ultrasonic transducers are aligned in parallel.

15. An arrangement according to claim 14,

**characterized in that** a single premagnetizing unit extends over all the magnetic flux guide pieces of the side-by-side-disposed ultrasonic transducers.

16. Use of the arrangement according to one of the claims 14 or 15 for generating and/or detecting horizontally polarized transverse waves,

**characterized in that** the coil arrangements of the at least two electromagnetic ultrasonic transducers are operated by means of phased-array triggering.

17. Use according to claim 16,

**characterized in that** the coil arrangement of all the electromagnetic ultrasonic transducers are triggered consecutively with a time-delayed phase trigger signal in such a manner that when ultrasonic waves are generated the ultrasonic waves entering the workpiece possesses a directional characteristic which is dependent on the phase triggering and whose main direction of propagation can be swung in relation to the normals 0° and 90° to the workpiece.

18. Use according to claim 16 or 17,
**characterized in that** in the course of generating ultrasonic waves inside the workpiece, the coil arrangements of the individual ultrasonic transducers are triggered in such a manner that two directly adjacent magnetic flux guide pieces which are oriented in opposite direction are each passed through by a magnetic flux.

**Revendications**

1. Convertisseur électromagnétique d'ultrasons,
**caractérisé en ce que** les surfaces frontales pouvant être tournées vers la pièce usinée du noyau magnétique sont reliées directement ou indirectement à une pièce magnétique conductrice d'influx reliant entre elles les surfaces frontales et présentant une surface tournée vers la pièce usinée.

2. Convertisseur électromagnétique d'ultrasons pour la génération sans moyen de couplage et/ou pour la réception d'ondes ultrasonores sous forme d'ondes transversales polarisées linéairement à l'intérieur ou en provenance d'une pièce usinée, comportant au moins une unité transformant les ondes ultrasonores à l'intérieur de la pièce usinée et présentant un dispositif de bobine pour la génération ou la mise en évidence d'un champ magnétique HF ainsi qu'une unité de pré-magnétisation pour la génération d'un champ magnétique quasi-statique qui, en cours d'usage, superpose le champ magnétique HF dans la pièce usinée, le dispositif de bobine étant disposé en forme de tore sur au moins un noyau magnétique réalisé en forme de segment de cercle ou de U et présentant respectivement deux surfaces frontales pouvant être tournées vers la pièce usinée,
**caractérisé en ce qu'**il est prévu au moins deux noyaux magnétiques ainsi qu'au moins deux pièces magnétiques conductrices d'influx,
qu'une surface frontale d'un noyau magnétique est reliée directement ou indirectement à une des au moins deux pièces magnétiques conductrices d'influx et que l'autre surface frontale d'un noyau magnétique est reliée directement ou indirectement à l'autre des au moins deux pièces magnétiques conductrices d'influx,
qu'une surface frontale de l'autre noyau magnétique est reliée directement ou indirectement à l'une des au moins deux pièces magnétiques conductrices d'influx et l'autre surface frontale de l'autre noyau magnétique est reliée directement ou indirectement à l'autre des au moins deux pièces magnétiques conductrices d'influx respectivement à distance du premier noyau magnétique et que
les pièces magnétiques conductrices d'influx présentent respectivement une surface tournée vers la pièce usinée.

3. Convertisseur électromagnétique d'ultrasons selon la revendication 2,
**caractérisé en ce que** les au moins deux noyaux magnétiques sont réalisés respectivement en forme de U et présentent respectivement deux branches longitudinales reliées par une pièce de connexion aux extrémités desquelles sont prévues les surfaces frontales,
que respectivement entre les branches longitudinales, il est prévu au moins un autre élément longitudinal qui est relié d'un côté à la pièce de connexion à l'extrémité de laquelle une autre surface frontale est prévue et
qu'au moins une autre pièce magnétique conductrice d'influx relie entre elles les surfaces frontales des éléments longitudinaux des deux aimants magnétiques.

4. Convertisseur électromagnétique d'ultrasons selon la revendication 1 ou 2,
**caractérisé en ce que**, pour générer des ondes ultrasonores, le dispositif de bobine est relié à un générateur HF permettant de générer des champs magnétiques HF.

5. Convertisseur électromagnétique d'ultrasons selon la revendication 1 ou 2,
**caractérisé en ce que**, pour mettre en évidence des ondes ultrasonores, le dispositif de bobine est relié à une unité d'amplificateur et/ou à une unité d'exploitation.

6. Convertisseur électromagnétique d'ultrasons selon la revendication 1 ou 2,
**caractérisé en ce que** le dispositif de bobine prévoit deux bobines séparées, un dispositif de bobine d'émission permettant de générer un champ magnétique HF et qui est relié à un générateur HF, ainsi qu'un dispositif de bobine de réception permettant de mettre en évidence un champ magnétique HF et qui est relié à une unité d'amplificateur et/ou une unité d'exploitation.

7. Convertisseur électromagnétique d'ultrasons selon une des revendications 1 à 6,
**caractérisé en ce que** la pièce magnétique conductrice d'influx est réalisée en forme de baguette et contient une matière légèrement magnétique.

**8.** Convertisseur électromagnétique d'ultrasons selon une des revendications 1 à 7, **caractérisé en ce que** la pièce magnétique conductrice d'influx est composée d'un dispositif en forme de pile d'éléments en plaques légèrement magnétiques ou est fabriquée à partir d'un matériau non conducteur électrique contenant des particules légèrement magnétiques réparties à la manière d'une matrice.

**9.** Convertisseur électromagnétique d'ultrasons selon une des revendications 1 à 8, **caractérisé en ce que** les surfaces frontales du noyau magnétique sont assemblées fixement à la pièce magnétique conductrice d'influx.

**10.** Convertisseur électromagnétique d'ultrasons selon une des revendications 1 à 9, **caractérisé en ce que**, directement ou indirectement sur une face frontale tournée vers la pièce usinée de l'au moins une pièce magnétique conductrice d'influx, est prévue l'unité de pré-magnétisation.

**11.** Convertisseur électromagnétique d'ultrasons selon une des revendications 1 à 10, **caractérisé en ce que** l'unité de pré-magnétisation est un dispositif d'aimant permanent ou d'électroaimant.

**12.** Convertisseur électromagnétique d'ultrasons selon une des revendications 1 à 12, **caractérisé en ce que** l'unité de pré-magnétisation est disposée de manière à ce que le champ magnétique quasi-statique puisse être conduit dans la pièce usinée perpendiculairement à la surface de la pièce usinée.

**13.** Convertisseur électromagnétique d'ultrasons selon une des revendications 1 à 10, **caractérisé en ce que** l'unité de pré-magnétisation est un dispositif d'électroaimant grâce auquel un champ magnétique quasi-statique peut être conduit dans la pièce usinée horizontalement par rapport à la surface de la pièce usinée.

**14.** Dispositif de génération sans moyen de couplage et/ou de réception d'ondes ultrasonores sous forme d'ondes transversales polarisées linéairement à l'intérieur ou en provenance d'une pièce usinée, **caractérisé en ce qu'**au moins deux convertisseurs électromagnétiques d'ultrasons selon une des revendications 1 à 3 sont juxtaposés avec un espacement mutuel de manière à ce que les sens longitudinaux des pièces magnétiques conductrices d'influx respectives des différents convertisseurs d'ultrasons soient orientés parallèlement les uns aux autres.

**15.** Dispositif selon la revendication 14, **caractérisé en ce que** les unités de pré-magnétisation des différents convertisseurs ultrasonores ont le même pôle ou qu'une seule unité de pré-magnétisation s'étend sur toutes les pièces magnétiques conductrices d'influx des convertisseurs d'ultrasons juxtaposés.

**16.** Utilisation du dispositif selon l'une des revendications 14 ou 15 pour générer et/ou mettre en évidence des ondes transversales polarisées horizontalement, **caractérisé en ce que** les dispositifs de bobines des au moins deux convertisseurs électromagnétiques d'ultrasons fonctionnent au moyen d'une commande à réseau en phase.

**17.** Utilisation selon la revendication 16, **caractérisée en ce que** les dispositifs de bobines de tous les convertisseurs électromagnétiques d'ultrasons sont commandés successivement par un signal de commande à phase retardée, que, dans le cas de la génération d'ondes ultrasonores, les ondes ultrasonores rentrant dans la pièce usinée ont une caractéristique de direction dépendant de la commande de phase dont le sens principal de propagation peut pivoter de 0° à 90° jusqu'à la normale par rapport à la surface de la pièce usinée.

**18.** Utilisation selon la revendication 16 ou 17, **caractérisée en ce que**, par la génération d'ondes ultrasonores à l'intérieur de la pièce usinée, les dispositifs de bobine des différents convertisseurs d'ultrasons sont commandés de manière à ce que deux pièces magnétiques conductrices d'influx voisines soient traversées respectivement par un influx magnétique dirigé à l'opposé de l'autre.

EP 1 572 382 B1

Fig. 1

Fig. 2 (Stand der Technik)

Fig. 3

$$\alpha = \text{arcsin}\ \frac{c_t \Delta t}{D}$$

Fig. 4

**Fig. 5**

Fig. 6

Fig. 7